# EUROPEAN PATENT APPLICATION

(11) **EP 1 375 978 A2**
(43) Date of publication of application: **02.01.2004**
(21) Application number: 03013801.0
(22) Date of filing: 18.06.2003
(51) Int. Cl.: F16H 61/02

(54) **Shift control device of parallel multishaft transmission for vehicle and shift control method for the same**

(30) Priority: 21.06.2002 JP 2002180689
(71) Applicant: TOYOTA JIDOSHA KABUSHIKI KAISHA, Toyota-shi, Aichi 471-8571 (JP)
(72) Inventor: Naito, Koji, Toyota-shi, Aichi-ken, 471-8571 (JP); Ogawa, Shinji, Toyota-shi, Aichi-ken, 471-8571 (JP); Amano, Takaya, Toyota-shi, Aichi-ken, 471-8571 (JP); Yamamoto, Kazuhiro, Toyota-shi, Aichi-ken, 471-8571 (JP)
(74) Representative: Vollnhals, Aurel

(57) **Abstract**

Since all engagement clutches except for an engagement clutch for a present shift stage are disengaged in step S3 until an immediately before shifting state is detected, rotational resistance is reduced, and consequently power loss is reduced. When a shift lever is operated and the immediately before shifting state is detected, an engagement clutch for a next shift stage is engaged in step S5. When the shift lever is further operated and a shifting request is detected, shifting is performed by switching switchable shafts in step S8, and an engagement clutch for a previous shift stage is disengaged.

## Description

### BACKGROUND OF THE INVENTION

### 1. Field of the Invention

The invention relates to a shift control device of a parallel multishaft transmission for a vehicle and a shift control method for the same. More particularly, the invention relates to art for reducing power loss due to dragging of a relative rotation portion which is not related to power transmission.

### 2. Description of the Related Art

A shift control device of a parallel multishaft transmission for a vehicle has been proposed which includes (a) plural input shafts that are parallel to each other and that are rotationally-driven through an input clutch respectively, (b) an output shaft that is provided in parallel with the plural input shafts, (c) plural shift gear pairs that are provided between the plural input shafts and the output shaft and that establish plural shift stages whose shift gear ratios are different to each other, (d) plural gear interruption devices each of which is provided so as to correspond to each of the plural shift gear pairs and which permit or interrupt power transmission, and (e) a shift request detection device that detects that a shift operation member has been shifted to a given shift request position by a driver, and which (f) performs shifting while switching the plural input shafts using the input clutch according to operation of the shift operation member. A device disclosed in Japanese Patent Laid-Open Publication No. 10-89456 is an example of the above-mentioned device. This device includes two input shafts on the same axis, and performs shifting while maintaining a transmission state of driving power by previously permitting power transmission in a gear interruption device corresponding to a shift gear pair for a next shift stage, and by engaging one of two clutches while disengaging the other clutch.

Also, a device disclosed in Japanese Patent Laid-Open Publication No. 8-4788 interrupts power transmission in all gear interruption devices corresponding to shift gear pairs which are not related to power transmission, except for the shift gear pair for a present shift stage during normal running, that is, at non-shifting time, and performs shifting by switching an input clutch after permitting power transmission in the gear interruption device corresponding to the shift gear pair for a next shift stage at shifting time. In this case, the input shaft which is not related to present power transmission is not forcibly rotated in accordance with rotation of an output shaft, unlike a case in which power transmission is previously permitted in the gear interruption device corresponding to the shift gear pair for the next shift stage. Accordingly, power loss due to rolling resistance of a bearing which supports the input shaft, drag resistance of the input clutch or the like is reduced. More particularly, when the input shaft which is not related to the present power transmission is not forcibly rotated, the input shaft is relatively rotated at a portion in which rotational resistance is small (for example, a portion supported by the bearing), and is not relatively rotated at a portion in which rotational resistance is large (for example, an input clutch). Consequently, rotational resistance is reduced in total, and power loss is reduced.

However, in the case of manual transmission in which shifting is performed by detecting that a shift operation member has been shifted to a given shift request position by a driver, when shifting is performed by switching the input clutch after permitting power transmission in the gear interruption device corresponding to the shift gear pair for the next shift stage at shifting time, as mentioned above, shifting response to shift operation by the driver may be poor, which may cause irritation to the driver.

### SUMMARY OF THE INVENTION

It is an object of the invention to obtain excellent shifting response even in manual transmission by interrupting power transmission in a gear interruption device corresponding to a shift gear pair which is not related to power transmission during running at non-shifting time while suppressing power loss due to rotational resistance such as rolling resistance and drag resistance of each portion.

In a shift control device of a parallel multishaft transmission for a vehicle according to a first aspect of the invention, (a) at least one of an input shaft and an output shaft which are parallel to each other is provided in plurality so as to function as switchable shafts, and each of the plural switchable shafts is coupled with a member on an input side or on an output side through an interruption device for switching which permits or interrupts power transmission. The device includes (b) plural shift gear pairs which are provided between the plural switchable shafts and the other shaft and which establish plural shift stages whose shift gear ratios are different to each other, (c) plural gear interruption devices each of which is provided so as to correspond to each of the plural shift gear pairs and which permit or interrupt power transmission, (d) a shift request detection device which detects that a shift operation member has been shifted to a given shift request position by a driver. In addition, the device (e) performs shifting while switching the plural switchable shafts using the interruption device for switching according to operation of the shift operation member. The shift control device of a parallel multishaft transmission for a vehicle, further includes (f) an immediately before shifting state detection device which detects an immediately before shifting state in which there is a high possibility that the shift operation member will be shifted to the shift request position, (g) gear interruption control means for interrupting power transmission in all the gear interruption devices corresponding to the shift gear pairs except for the gear pairs for a present shift stage until the immediately before shifting state is detected by the immediately before shifting state detection device, and for permitting power transmission in the gear interruption device corresponding to the shift gear pair for a next shift stage after the immediately before shifting state is detected, and (h) shift means for performing shifting by switching the switchable shaft using the interruption device for switching and for interrupting power transmission in the gear interruption device corresponding to the shift gear pair for a previous shift stage after the shift request detection device detects that the shift operation member has been shifted to the shift request position.

In the shift control device according to the first aspect, power transmission is interrupted in all the gear interruption devices corresponding to the shift gear pairs which are not related to power transmission, except for the shift gear pairs for the present shift stage until the immediately before shifting state is detected by the immediately before shifting state detection device. Accordingly, the switchable shaft which is not related to power transmission is permitted to rotate freely during normal running, that is, at non-shifting time. The switchable shaft is relatively rotated at a portion in which rotational resistance is small (for example, a portion supported by a bearing) among relative rotation portions of portions which are mechanically related to the switchable shaft, and is not relatively rotated at a portion in which rotational resistance is large (for example, interruption device portion for shifting). Consequently, rotational resistance is reduced in total, and power loss is reduced.

Meanwhile, when the immediately before shifting state detection device detects the immediately before shifting state in which there is a high possibility that the shift operation member will be shifted to the shift request position by a driver, power transmission in the gear interruption device corresponding to the shift gear pair for the next shift stage is permitted. Further, when the shift request detection device detects that the shift operation member has been shifted to the shift request position, shifting is performed by switching the switchable shaft using the interruption device for switching. Accordingly, shifting response to shift operation by the driver is enhanced, compared with a case in which power transmission in the gear interruption device for the next shift stage is permitted and the switchable shaft is switched after the shift operation member has been shifted to the shift request position.

A shift control device of a parallel multishaft transmission for a vehicle according to a second aspect of the invention includes (a) plural input shafts each of which is rotationally driven through an interruption device for switching that permits or interrupts power transmission and which are parallel to each other, (b) an output shaft that is provided in parallel with the plural input shafts (c) plural shift gear pairs which are provided between the plural input shafts and the output shaft, and which establish plural shift stages whose shift gear ratios are different to each other, (d) plural gear interruption devices each of which is provided so as to correspond to each of the shift gear pairs and which permit or interrupt power transmission , and (e) a shift request detection device that detects that the shift operation member has been shifted to a given shift request position by a driver. In addition, the device performs shifting while switching the plural input shafts using the interruption device for switching according to operation of the shift operation member. The shift control device of a parallel multishaft transmission for a vehicle, further includes (g) an immediately before shifting state detection device which detects an immediately before shifting state in which there is a high possibility that the shift operation member will be shifted to the shift request position, (h) gear interruption control means for interrupting power transmission in all the gear interruption devices corresponding to the shift gear pairs except for shift gear pair for a present shift stage until the immediately before shifting state is detected by the immediately before shifting state detection device, and for permitting power transmission in the gear interruption device corresponding to a shift gear pair for a next shift stage after the immediately before shifting state is detected, and (i) shift means for performing shifting by switching the input shaft using the interruption device for switching, and for interrupting power transmission in the gear interruption device corresponding to a shift gear pair for a previous shift stage after the shift request detection device detects that the shift operation member has been shifted to the shift request position.

The second aspect substantially corresponds to an embodiment according to the first aspect, and the same effect as that in the first aspect can be obtained. The plural input shafts in the second aspect correspond to the plural switchable shafts in the first aspect.

In the second aspect, plural input shafts are provided as switchable shafts, and shifting is performed when power transmission between the input shafts and a member on an input side such as a crankshaft of an engine is appropriately switched by the interruption device for switching. However, when the first aspect is embodied, plural output shafts may be provided as switchable shafts, and shifting may be performed when power transmission between the output shafts and a member on an output side such as a ring gear of a differential gear mechanism is appropriately switched by the interruption device for switching. As a driving power source for running a vehicle, an electric motor or the like may be employed in addition to an engine which operates by fuel combustion.

The plural switchable shafts (input shafts in the second aspect) may be provided on the same axis so as to pass through a shaft center of another switchable shaft. However, plural switchable shafts may be provided separately in a direction perpendicular to the shaft center. The number of the switchable shafts may be two. However, three or more switchable shafts may be provided. The shift gear pair is provided between each switchable shaft and the other shaft such that the switchable shafts can be switched sequentially during normal shifting. More particularly, when there are two switchable shafts, the shift gear pairs which establish a first shift stage, a third shift stage, a fifth shift stage, and the like (odd-numbered shift stages) and the shift gear pairs which establish a second shift stage, a fourth shift stage, a sixth shift stage, and the like (even-numbered shift stages) need to be separately provided such that shifting is performed, for example, by switching the switchable shaft for establishing each stage. When there are three switchable shafts, for example, the shift gear pairs which establish the first shift stage and the fourth shift stage (1 + 3N stages), the shift gear pairs which establish the second shift stage and the fifth shift stage (2 + 3N stages), and the shift gear pairs which establish the third shift stage and the sixth shift stage (3 + 3N stages) need to be separately provided. In this case, skip shifting can be performed. The above mentioned "N" denotes zero or a natural number.

The number of the shafts (the output shaft in the second embodiment) on the side opposite to the switchable shaft may be one. However, plural shafts may be provided on the side opposite to the switchable shaft. When plural shafts are provided, the shafts may be coupled through a gear, a chain, a belt or the like such that power transmission is constantly performed between the shafts and a member on the output side such as a ring gear of the differential gear mechanism, or a member on the input side such as a crankshaft of the engine.

As an interruption device for switching, a frictional engagement type clutch is preferably employed. However, a brake may be employed which produces an output from an output element by fixing a reaction force element. As a clutch or a brake, various types of devices may be conceivable, for example, a device which is normally maintained in an engagement state by a spring member such as a diaphragm spring and which is disengaged by an actuator of hydraulic pressure type, an electric type or the like, a frictional engagement device of a single disk type, multiple disk type, or the like which is frictionally engaged by hydraulic pressure or electromagnetic force. Also, the interruption device for switching may be configured so as not only to simply permit or interrupt power transmission but also to perform power transmission by performing shifting at different shift gear ratio for each of the plural switchable shafts.

As a gear interruption device, a synchronous engagement clutch is preferably employed. However, various interruption devices such as a hydraulic frictional clutch may be employed. This gear interruption device can be provided on either of an input shaft side or an output shaft side

The shift operation member includes a shift lever which is operated between two shift request positions, that are an upshift position at which shifting is performed to a shift stage whose shift gear ratio is small and an downshift position at which shifting is performed to a shift stage whose shift gear ratio is large. The shift request detection device includes an ON-OFF switch in which ON/OFF is switched when the shift lever is shifted to the upshift position or the downshift position. The shift operation member may be an item in which a desired shift stage is directly selected when the shift lever is shifted to the shift request position that is set for each shift stage. The shift request detection device may include the ON-OFF switch, a stroke sensor or the like which is provided for each shift request position.

The immediately before shifting detection device includes a position sensor such as the ON-OFF switch or the stroke sensor which detects that the shift operation member has reached a portion in the vicinity of the shift request position, or a load sensor which detects that a predetermined operating force is applied to the shift operation member. In the case where the shift request position is set for each shift stage, the immediately before shifting state can be detected in the above-mentioned manner when the shift operation member is shifted to the shift request position for the next shift stage. However, the immediately before shifting state may be determined by detecting that the shift operation member has shifted out of the shift request position for the previous shift stage using, for example, the shift request detection device. In this case, when the desired shift stage can be directly selected, the gear interruption control device needs to estimate the next shift stage based on an operation state such as an output request amount (an accelerator operation amount), a vehicle speed, presence or absence of brake operation, for example, when the immediately before shifting state is determined, and permit power transmission in the gear interruption for the corresponding shift gear pair. When three or more switchable shafts are provided, the next shift stage may be estimated for each of the two or more switchable shafts which are other than the switchable shaft that is related to the present shift stage, and power transmission may be permitted in the gear interruption devices corresponding to the shift gear pairs for the estimated next shift stages.

The shift means performs shifting by switching the switchable shafts (the input shaft in the second invention) using the interruption device for switching, and interrupts power transmission in the gear interruption device corresponding to the shift gear pair for the previous shift stage. It is preferable to interrupt power transmission in the gear interruption device for the previous shift stage, while switching the switchable shaft, or immediately after switching the switchable shaft. However, various configurations may be made such as a configuration in which power transmission is interrupted after a predetermined interruption condition is satisfied.

The gear interruption control device interrupts power transmission in all the gear interruption devices corresponding to the shift gear pairs except for the gear pair for the present shift stage until the immediately before shifting state is detected by the immediately before shifting state detection device. However, various configurations may be made. In the case where a predetermined condition is satisfied, for example, when a sport mode is selected in which importance is placed on running performance, power transmission may be permitted in the gear interruption device corresponding to the shift gear pair for the estimated next stage even during normal running, that is, at non-shifting time in which the immediately before shifting state is not detected, in preference to interruption of power transmission by the gear interruption control device. When the immediately before shifting state is detected, power transmission is permitted by the gear interruption control device in the gear interruption device for the next shift stage. It is preferable to switch the switchable shaft by the shift means after power transmission is completely permitted in the gear interruption device for the next shift in terms of suppressing shock due to shifting.

### BRIEF DESCRIPTION OF THE DRAWINGS

FIG. 1 is a schematic diagram showing a schematic configuration of a driving device for a vehicle which includes a shift control device that is an embodiment according to the invention;
FIG. 2 is a block diagram describing a control system of the driving device in FIG. 1;
FIG. 3 is a perspective view showing an example of a shift lever in the driving device in FIG. 1;
FIG. 4 is a diagram describing each of ON-OFF switches for shift request detection and for immediately before shifting state detection which are provided in the vicinity of an position "S" of the shift lever in FIG. 3;
FIG. 5 is a flowchart describing shift control which is performed by signal processing of an electronic control unit in FIG. 2;
FIG. 6 is a schematic diagram showing a state in which an engagement clutch for another shift stage is disengaged (in a neutral standby state) in step S3 in FIG. 5 in the case of a first shift stage in a transmission;
FIG. 7 is a schematic diagram showing a state in which the engagement clutch for the next shift stage (the second shift stage) is engaged in step S5 in FIG. 5, when the shift lever is operated in the state shown in FIG. 6, and an immediately before upshifting state is detected;
FIG. 8 is a schematic diagram showing a state in which the shift lever is operated for upshifting in FIG. 7, input switching is performed in steps S8, S9 in FIG.
5, and the engagement clutch for the previous shift stage (the first shift stage) is disengaged;
FIG. 9 is a schematic diagram showing an example of a transmission in which three input shafts are provided as switchable shafts;
FIG. 10 is a diagram showing an example of a shift lever by which a desirable shift stage can be directly detected, along with the switches for shift request detection and for immediately before shifting state detection; and;
FIG. 11 is a vertical sectional view showing an example of a shift lever by which the immediately before shifting state can be detected based on oscillation of a knob.

### DETAILED DESCRIPTION OF THE PREFERRED EMBODIMENTS

Hereafter, each embodiment according the invention wil be described in detail with reference to accompanying drawings.

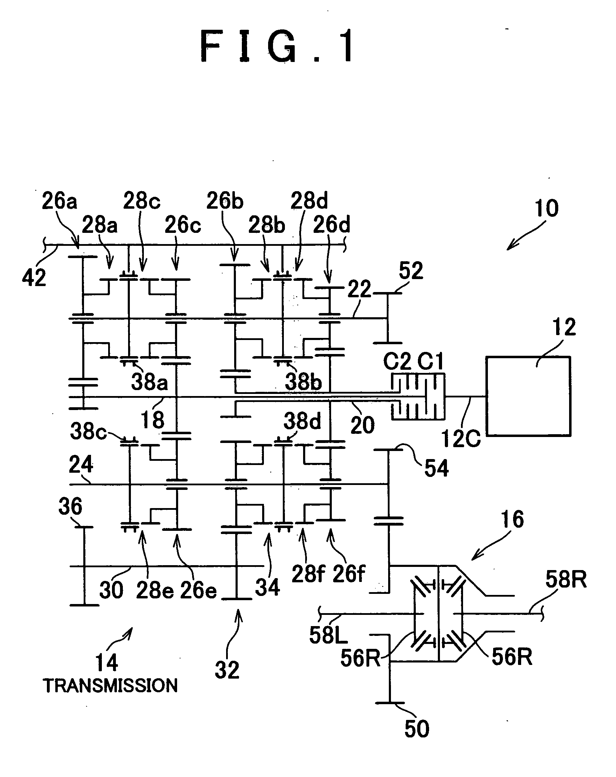

FIG. 1 is a schematic diagram describing a schematic configuration of a driving device 10 for a vehicle to which the invention is applied, and is for an FF (front engine/front drive) vehicle. The driving device 10 for a vehicle includes an engine 12 which generates power by fuel combustion, a transmission 14 and a differential gear mechanism 16. The engine 12 is a driving power source for running. The transmission 14 is provided in the housing in the differential gear 16 is provided, and forms trans-axle.

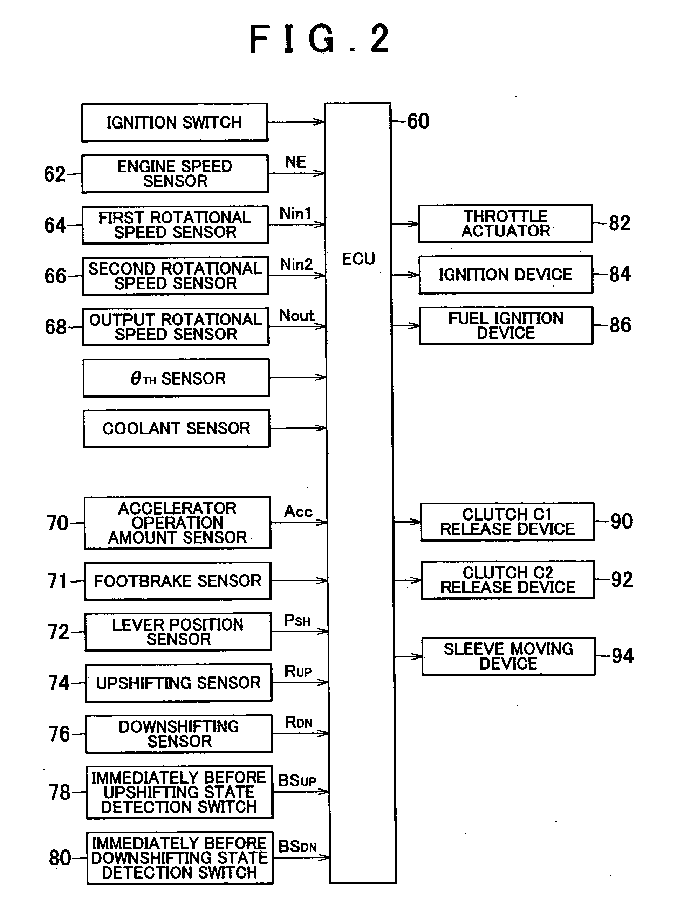

The transmission 14 is a parallel maultishaft transmission which includes two input shafts 18, 20, and two output shafts 22, 24 that are parallel to each other. The two input shafts are coupled with a crank shaft 12c of the engine 12 through input clutches C1, C2, respectively, and the input shaft 18 passes through a shaft center of the other input shaft 20 and protrudes therefrom. The input clutches C1, C2 are interruption devices for switching which permit or interrupt power transmission between the input shafts 18, 20 that are the switchable shafts, and the crank shaft 12c that is a member on an input side. Both of the input clutches C1, C2 are normally maintained in an engagement state by a diaphragm spring. Also, the input clutches C1, C2 are disengaged (interrupted) by a clutch C1 release device 90 and a clutch C2 release device 92 (refer to FIG. 2), respectively, and a disengagement state is maintained without an external input. The clutch C1 release device 90 and the clutch C2 release device 92 are configured so as to activate a hydraulic cylinder for release through a worm gear, a screw shaft, or the like using an electric motor such that the engagement state maintained by the diaphragm is cancelled through a release bearing, and the engagement torque is continuously changed, and so as to maintain the disengagement state by the worm gear or the like, without power supply. The interruption device for switching includes a clutch C1 release device 90 and the clutch C2 release device 92.

In the transmission 14, forward six stages and reverse one stage can be achieved, and shift gear pairs, 26a, 26c, 26e which establish a first shift stage, a third shift stage and a fifth shift stage (odd-numbered forward shift stages) are provided between the input shaft 18 and the output shafts 22, 24. Also, gears of the shift gear pairs 26a, 26c, 26e on the side of the output shafts 22, 24 are relatively rotatable with respect to the output shafts 22, 24, and power transmission between the gears on the side of the output shafts 22, 24 and the output shafts 22, 24 is permitted or interrupted by engagement clutches 28a, 28c, 28e. The shift gear pairs 26c, 26e are provided at the same position in an axial direction, and the gear on the side of the input shaft 18 is common to the shift gear pair 26c, 26e. Shift gear pairs 26b, 26d, 26f which establish a second shift stage, a fourth shift stage and a sixth shift stage (even-numbered forward shift stages) are provided between the input shaft 20 and the output shafts 22, 24. Gears of the shift gear pairs 26b, 26d, 26f on the side of the output shafts 22, 24 are relatively rotatable with respect to the output shafts 22, 24, and power transmission between the gears on the side of the output shafts 22, 24 and the output shafts 22, 24 is permitted or interrupted by engagement clutches 28b, 28d, 28f. The shift gear pairs 26d, 26f are provided at the same position in the axial direction, and the gear on the side of the input shaft 20 is common to the shift gear pairs 26d, 26f. The reverse shift stage is established between one gear of the reverse gear pair 32 which is provided in the output shaft 24, and the other gear of the reverse gear pair 32 which is provided in a counter shaft 30 for reverse. The gear of the reverse gear pair 32 on the side of the output shaft 24 is relatively rotatable with respect to the output shaft 24, and power transmission between the gear on the side of the output shaft 24 and the output shaft 24 is permitted or interrupted by the engagement clutch 34. A gear 36 for reverse which is meshed with the gear of the shift gear pair 26a on the side of the input shaft 18 is provided in the counter shaft 30, and is rotated by the input shaft 18. The output shafts 22, 24 and the counter shaft 30 are provided around the shaft center of the input shafts 18, 20. FIG 1. Is a development in which the shaft centers of these shafts are shown in the common plain surface.

The engagement clutches 28a to 28f (hereinafter, referred to as an engagement clutch 28 unless they need to be distinguished) are gear interruption devices which permit or interrupt power transmission between the input shaft 18 or 20, and the output shaft 22 or 24 through the shift gear pairs 26a to 26f (hereinafter, referred to as shift gear pair 26 unless they need to be distinguished), and includes a synchronous mechanism such as a synchronizer ring. The engagement clutch 34 is an interruption device which permits or interrupts power transmission between the output shaft 24 and the counter shaft 30 through the reverse gear pair 32, and further between the output shaft 24 and the input shaft 18, and includes a synchronous mechanism such as a synchronizer ring. The engagement clutches 28a, 28c are engaged or disengaged by a common clutch hub sleeve 38a, the engagement clutches 28b, 28d are engaged or disengaged by a common hub sleeve 38b, the engagement clutch 28e is engaged or disengaged by a clutch hub sleeve 38c, and the engagement clutches 28f, 34 are engaged or disengaged by the common clutch hub sleeve 38d. Each of these four clutch hub sleeves 38a to 38d is moved in the axial direction by a sleeve moving device 94 (refer to FIG. 2). One of forward six stages and reverse one stage is established when the given engagement clutch 28 or 34 is engaged while the input clutch C1 or C2 is engaged. The gear interruption device includes this sleeve moving device 94.

The sleeve moving device 94 includes a shift select shaft 42 which is rotatable in a select direction (around the shaft center) and is movable in a shift direction (axial direction). The shift select shaft 42 is positioned at five select positions in total. The five select positions include four engagement positions at which the shift select shaft 42 can be engaged with one of the clutch hub sleeves 38a to 38d in the select direction, and a non-engagement position at which the shift select shaft 42 is not engaged with any one of the clutch hub sleeves 38a to 38d. Also, the shift select shaft 42 is positioned at three shift positions in total. The three shift positions include a central neutral position (the state in FIG. 1) at which both of the engagement clutches 28, 34 are disengaged in the shift direction, a first shift position which is on a left side of the neutral position in FIG. 1 and at which the engagement clutches 28a, 28b or 34 is engaged, and a second shift position which is on a right side of the neutral position in FIG. 1 and at which the engagement clutches 28c, 28d, 28e, or 28f is engaged. One of the engagement clutches 28, 34 can be engaged, or a neutral state in which both of the engagement clutches 28, 34 are disengaged can be realized by moving the shift select shaft 42 in the select direction and in the shift direction. Since the non-engagement position is set as the select position, one of the engagement clutches 28 can be engaged by moving the shift select shaft 42 to the non-engagement position while the other engagement clutch 28 is engaged. Among the six engagement clutches 28, two engagement clutches whose clutch hub sleeves 38a to 38d are different to each other, and whose input shafts 18, 20 are different to each other can be engaged simultaneously. More particularly, two engagement clutches that are one of the engagement clutches 28a, 28c, 28e, and one of the engagement clutches 28b, 28d, 28f can be engaged simultaneously.

Output gears 52, 54, which are meshed with a ring gear 50 of the differential gear device 16 that is a member on the output side, are provided in the output shaft 22, 24, respectively. The numbers of the teeth are different between the output gears 52, 54. Gear ratios of the shift gear pair 26 and the reverse gear pair 32, and the number of the teeth of the gear 36 for reverse are set in consideration of the numbers of the teeth of the output gears 52, 54 such that a given shift gear ratio is obtained. The differential gear mechanism 16 is a bevel gear type, and drive shafts 58R, 58L are coupled with a pair of side gears 56R, 56L respectively by spline engagement or the like so as to rotate right and left front wheels (driving wheels) (not shown).

In each of relative rotation portions of the transmission 14, more particularly, in each of seven relative rotation portions between gears of the shift gear pairs 26 or the reverse gear pair 32 on the side of the output shaft 22 or 24, and the output shaft 22 or 24, and a relative rotation portion between the input shaft 18 and 20, needle bearings are provided, such that rotational resistance due to a relative rotation is reduced. Between the input shaft 18 and the input shaft 20, needle bearings are provided at two positions which are apart in axial direction.

In the transmission 14, the four clutch hub sleeves 38a to 38d are moved using a single select shaft 42. However, a sleeve moving device may be provided for each of the clutch hub sleeves 38a to 38d such that the clutch hub sleeves 38a to 38d are moved independently. In this case, among plural engagement clutches 28, two clutches whose clutch hub sleeves 38a to 38d are different to each other and whose input shafts 18, 20 are different to each other can be engaged simultaneously with reliability. The clutch hub sleeves 38a to 38d can be provided for each of the engagement clutches 28a to 28f respectively.

A pair of the input shafts 18, 20 is coupled with the crank shaft 12c through the input clutches C1, C2. However, the output shafts 22, 24 may be used as switchable shafts by providing clutches as interruption devices for switching between the output shafts 22, 24 and the output gears 52, 54, respectively. In this case, the input shafts 18, 20 can be configured as a single input shaft, and can be integrally coupled with the crank shaft 12c.

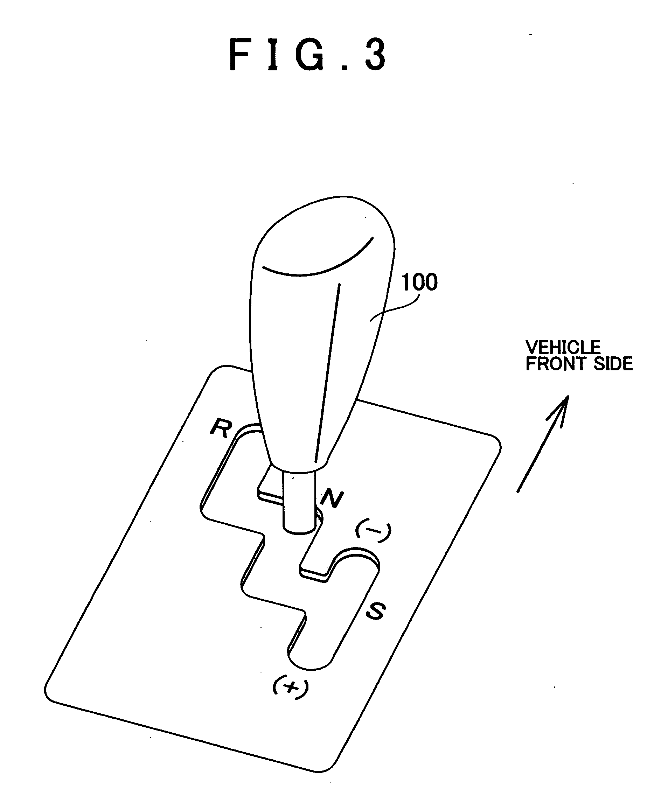

FIG. 2 is a block diagram describing a control system which is included in the driving device 10 according to the embodiment, and showing a signal which is input into an electronic control unit 60 and a signal which is output from the electronic control unit 60. Signals showing an engine speed NE, rotational speeds Nin 1, Nin 2 of the input shafts 18, 20, a rotational speed Nout (corresponding to a vehicle speed V) of one of the output shafts 22, 24, an operation amount Acc of an accelerator pedal corresponding to an output request amount by a driver, ON/OFF state of a foot brake, a lever position PS_{H} which is an operation position of a shift lever 100 (refer to FIG. 3), an upshifting request R_{UP} of a shift stage, a downshifting request R_{DN}, an immediately before upshifting operation state BS_{UP}, an immediately before downshifting operation state BS_{DN}, and the like are supplied from an engine speed (NE) sensor 62, a first input rotational speed (Nin 1) sensor 64, a second input rotational speed (Nin 2) sensor 66, an output rotational speed (Nout) sensor 68, an accelerator operation amount sensor 70, a foot brake switch 71, a lever position sensor 72, an upshifting switch 74, a downshifting switch 76, an immediately before upshifting state detection switch 78, an immediately before downshifting state detection switch 80 and the like.

The shift lever 100 is provided, for example, next to a driver's seat, and is selectively shifted to and maintained at one of the operation position among three operation positions, which are "R (reverse)", "N (neutral)", and "S(sequential)". The lever position sensor 72 detects the operation position (lever position) P_{SH}, for example, using a plurality of ON-OFF switches provided at each operation position. When the shift lever 100 has been shifted to the position "R", the engagement clutch 34 for reverse is engaged so as to establish the reverse shift stage. When the shift lever 100 has been shifted to the position "N", all of the engagement clutches 28, and the engagement clutch 34 are disengaged so as to realize a power transmission interruption state (neutral). When the shift lever 100 has been shifted to the position "S", a sequential mode (manual mode) is realized in which the shift stage is changed among plural forward shift stages by manual operation of the driver, and the shift lever 100 has been shifted to a position "(+)" and a position "(-)" which are provided in a longitudinal direction of the vehicle. When this operation of the shift lever is detected by an upshifting switch 74 and a downshifting switch 76, this shift stage is changed among a plurality of the forward shift stages of the transmission 14. The position "(+)" is a position for upshifting, and the shift stage is shifted toward a higher speed stage, that is, the shift stage is shifted toward a high speed stage side in which a shift gear ratio is small, by one stage per one operation. Meanwhile, the position "(-)" is a position for downshifting, and the shift stage is shifted toward a lower speed stage, that is, the shift stage is shifted toward a low speed stage side in which a shift gear ratio is large, by one stage per one operation. The shift lever 100 corresponds to a shift operation member, the upshifting switch 74 and the downshifting switch 76 correspond to shift request detection devices, and the position "(+)" and the position "(-)" are shift request positions.

Detent mechanisms are provided between the position "R" and the position "N", and between the position "N" and the position "S" respectively, and a peak of necessary operating force is provided by an urging device such as a spring, a cam, and the like. Thus, feeling of detent is provided to shift lever operation. Since the shift lever 100 is unstable at both the position "(-)" and the position "(+)" which are provided ahead of and behind the position "S", the shift lever 100 which has been shifted to the position "(-)" or the position "(+)" is automatically returned to the position "S" by the urging device such as a spring.

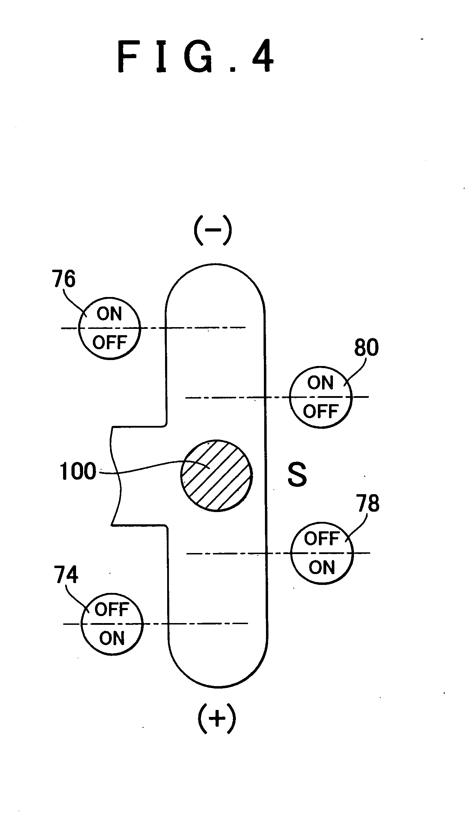

Both the upshifting switch 74 and the downshifting switch 76 are ON-OFF switches, and are provided in the vicinity of the position "(+)" and the position "(-)" respectively, as shown in FIG.4. When the shift lever 100 reaches a portion in the vicinity of the position "(+)", the upshifting switch 74 is switched from OFF to ON so as to output a signal which indicates an upshifting request R_{UP}. Meanwhile, when the shift lever 100 reaches a portion in the vicinity of the position "F)", the downshifting switch 76 is switched from OFF to ON so as to output a signal which indicates a downshifting request R_{DN}. Also, the immediately before upshifting state detection switch 78 and the immediately before downshifting state detection switch 80 are ON-OFF switches. These switches are provided ahead of the upshifting switch 74 and the downshifting switch 76, in a portion which is close to the position "S", and switching between ON and OFF is performed. The immediately before upshifting state detection switch 78 outputs a signal which indicates an immediately before shifting state BS_{UP} in which there is a high possibility that upshifting operation will be performed. Meanwhile, the immediately before downshifting state detection switch 80 outputs a signal which indicates an immediately before downshifting state BS_{DN} in which there is a high possibility that downshifting operation will be performed. These immediately before upshifting state detection switch 78 and immediately before downshifting state detection switch 80 correspond to an immediately before shifting state detection device.

As can be understood from FIG. 2, the electronic control unit 60 includes a so-called microcomputer which is provided with CPU, ROM, RAM, an input/output interface and the like. The electronic control unit 60 controls a throttle actuator 82, an ignition device 84, a fuel injection device 86 and the like so as to perform output control of the engine 12, controls the clutch C1 release device 90, the clutch C2 release device 92, and the sleeve moving device 94 so as to perform shifting control of the transmission 14, and performs various other controls by performing signal processing according to a program which is previously stored in the ROM while using a temporary storage function of the RAM.

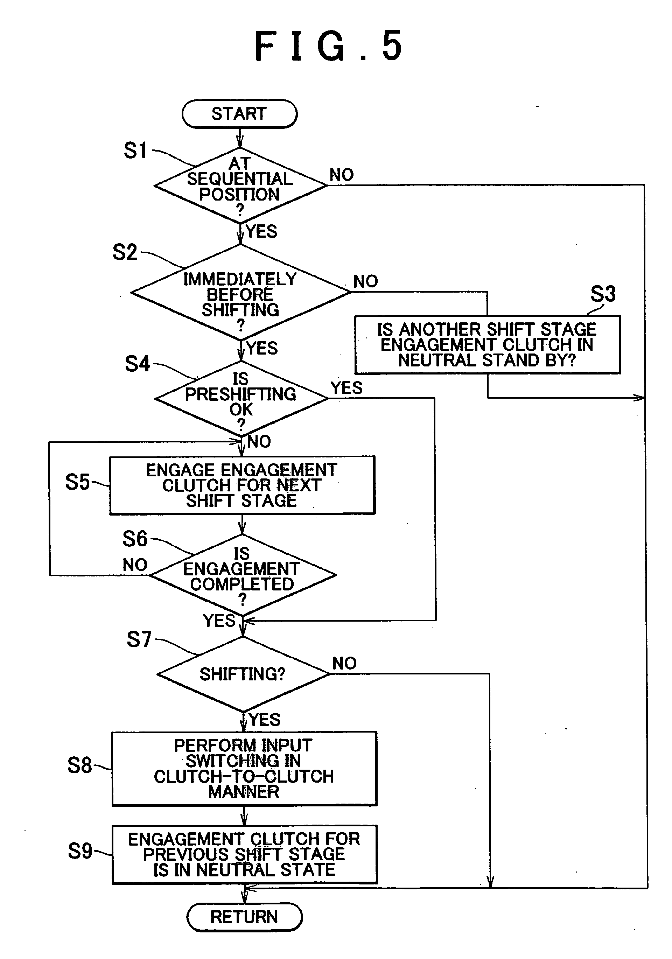

FIG. 5 is a flowchart describing a concrete content of shift control which is performed by signal processing of the electronic control unit 60. In step S1, it is determined whether the shift lever 100 is at the position "S", that is, whether the present mode is a sequential mode in which the shift stage is changed among a plurality of forward shift stages by manual operation according to the driver's desire for shifting, according to a signal which indicates the lever position P_{SH} supplied from the lever position sensor 72. When the shift lever 100 is not at the position "S", the routine ends. Meanwhile, when the shift lever 100 at the position "S", step S2 is performed. Then, it is determined whether the shift lever 100 has been shifted from the position "S" to the side of the position "(+)" or the position "F)", and the vehicle is in the immediately before shifting state, based on whether a signal which indicates the immediately before upshifting state BS_{UP} or the immediately before downshifting state BS_{DN} is supplied from the immediately before upshifting state detection switch 78 or the immediately before downshifting state detection switch 80. When a signal which indicates the immediately before shifting state BS_{UP} or BS_{DN} is supplied, step 4 and subsequent steps are performed. Meanwhile, when neither of these is supplied, that is, during normal running when the vehicle is not in the immediately before shifting state, step S3 is performed so as to disengage all the engagement clutches 28 corresponding to the shift gear pairs 26 which are not related to power transmission except for a shift gear pair for the present shift stage. Consequently, the input shaft 18 or 20 which is not related to power transmission is permitted to rotate freely.

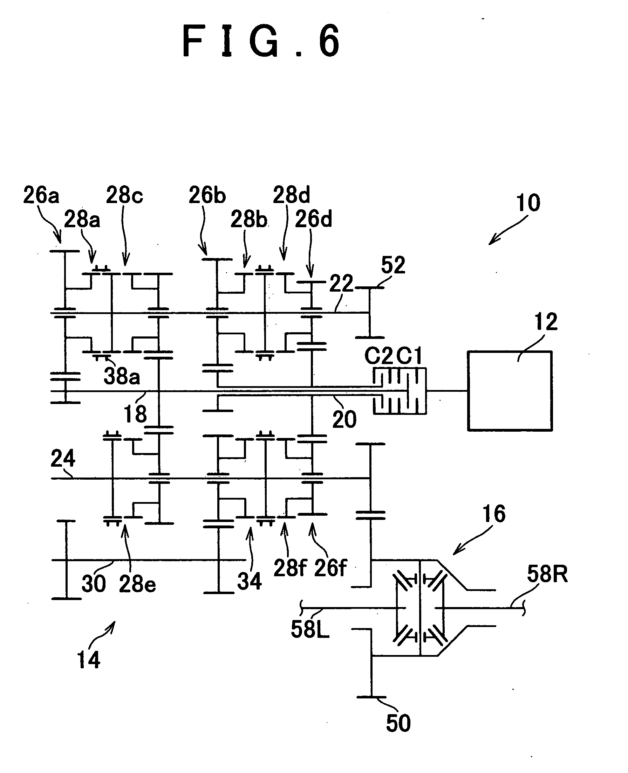

For example, FIG. 6 shows a case in which the engagement clutch 28a is engaged, and the first shift stage is established. In this case, power is transmitted from the input clutch C1 to the differential gear mechanism 16 and further to the drive shafts 58R, 58L through the input shaft 18, the shift gear pair 26a, the engagement clutch 28a and the output shaft 22. At this time, since all the other clutches 28b to 28f are disengaged during normal running when the step S3 is performed, power transmission is not performed between the other input shaft 20 and the output shafts 22, 24. In addition, since the input clutch 20 is in a disengagement state, the input shaft 20 becomes freely rotatable, and is relatively rotated at a portion in which rotational resistance is small among the relative rotation portions of portions which are mechanically related to the input shaft 20, and is not relatively rotated at a portion in which rotational resistance is large. Consequently, rotational resistance is reduced in total, and power loss is reduced. More specifically, when drag resistance of the input clutch C2 is large, the input shaft 20 is rotated along with the crankshaft 12c, and is rotated substantially integrally with the input shaft 18. Also, since the shift gear pairs 26b, 26d, 26f are rotationally-driven due to the rotation of the input shaft 20, gears of the shift gear pairs 26b, 26d, 26f on the side of the input shafts 22, 24 are relatively rotated with respect to the output shafts 22, 24.

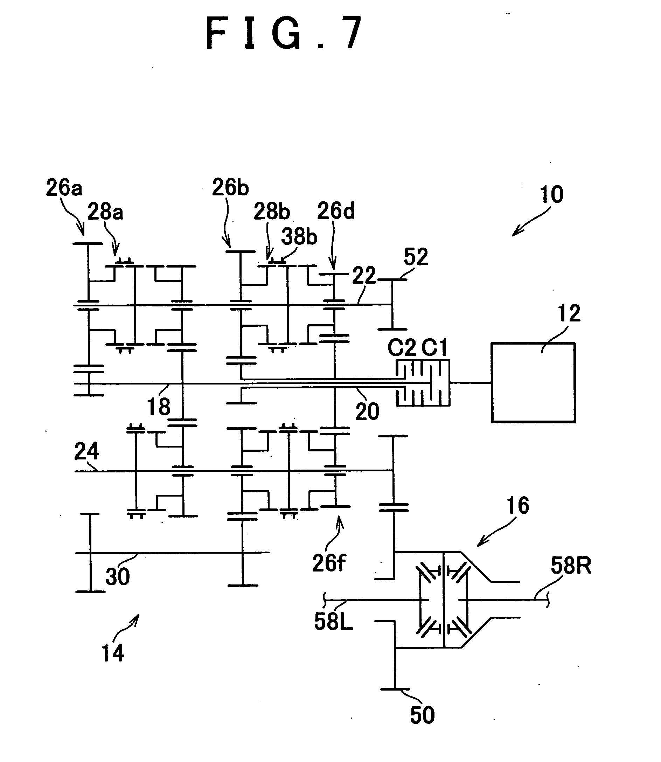

Meanwhile, as shown in FIG. 7, when the engagement clutch 28b which is related to the second shift stage that is the next shift stage is engaged, and the shift gear pair 26b is coupled with the output shaft 22, the input shaft 20 is rotationally-driven through the shift gear pair 26b. Accordingly, the input clutch C2 is relatively rotated, and comparatively large rotational resistance is generated due to dragging. The shift gear pairs 26 except for the shift gear pair 26, that is, the shift gear pairs 26d, 26f are rotationally-driven by the input shaft 20 such that the gears of the shift gear pairs 26d, 26f on the side of the output shafts 22, 24 are relatively rotated with respect to the output shafts 22, 24 as in the case in which the engagement clutch 28b is disengaged as shown in FIG. 6.

As can be understood from FIG. 5, when a signal which indicates the immediately before shifting state BS_{UP} or BS_{DN} is supplied from the immediately before upshifting state detection switch 78 or the immediately before downshifting state detection switch 80, an affirmative determination (YES) is made in step S2, and step S4 and subsequent steps are performed. In Step S4, it is determined by a flag or the like whether preshifting in step S5 has already been completed. When preshifting has been completed, step S7 and subsequent steps are performed immediately. However, since preshifting is not performed in the first cycle after an affirmative determination is made in step S2, step 5 is performed. In step 5, the engagement clutch 28 corresponding to the shift gear pair 26 which is related to the next shift stage is engaged while maintaining the engagement state of the engagement clutch 28 which is related to the present shift stage using the sleeve moving device 94. The next stage signifies the shift stage which is higher by one stage when a signal which indicates the immediately before upshifting state BS_{UP} is supplied, and signifies the shift stage which is lower by one stage when a signal which indicates the immediately before downshifting state BS_{DN} is supplied. In step S6, it is determined, for example, by a moving stroke of the shift select shaft 42 whether the engagement of the engagement clutch 28 for the next shift stage has been completed. When the engagement, that is, preshifting has been fully completed, step S7 and subsequent steps are performed. FIG. 7 shows a state in which the engagement clutch 28b which is related to the second shift stage is engaged while the engagement clutch 28a which is related to the first shift stage is engaged when the shift lever 100 has been shifted to the position "(+)" side during running at the first shift stage, and a signal which indicates the immediately before upshifting state BS_{UP} is supplied from the immediately before upshifting state detection switch 78.

In step S7, it is determined whether the shift lever 100 has reached a portion in the vicinity of the position "(+)" or the position _{"}(-)" based on whether a signal which indicates the upshifting switch R_{UP} or the downshifting switch R_{DN} is supplied from the upshifting switch 74 or the downshifting switch 76. When a signal which indicates the upshifting request R_{UP} or the downshifting request R_{DN} is supplied, step S8 and subsequent steps are performed. In step S8, switching between the input clutches C1 and C2 (input switching in a clutch-to-clutch manner) is performed so as to perform shifting, and the engagement clutch 28 for the previous shift stage is disengaged in step S9. The input switching in the clutch-to-clutch manner in step S8 is performed such that transmission of driving power is not interrupted while preventing a large driving torque change (shock due to shifting) by gradually increasing an engagement torque of the input clutch C1 or C2 which is related to the next shift stage while disengaging the input clutch C1 or C2 which is related to the previous shift stage, in the same manner as the clutch-to-clutch shifting in an automatic transmission of the planetary gear type that is frequently used at present.

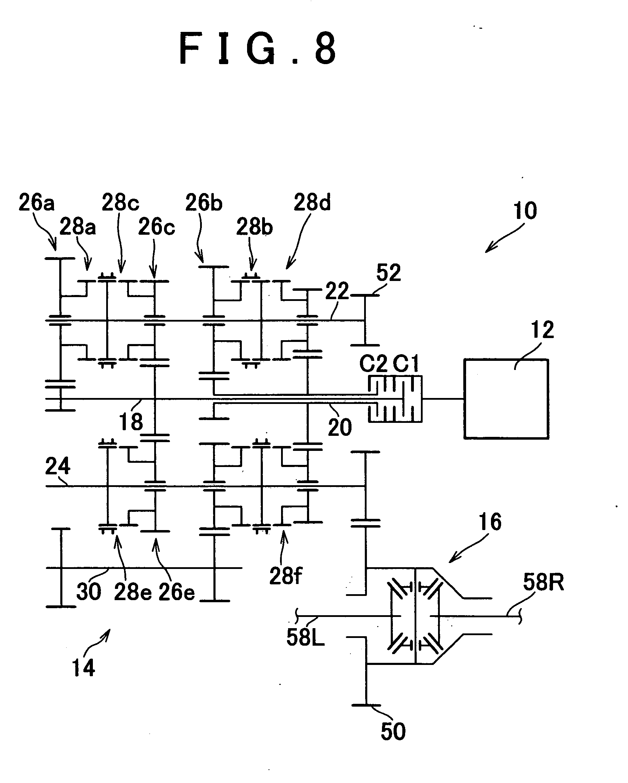

FIG. 8 shows a state in which the second shift stage is established by disengaging the input clutch C1 and engaging the input clutch C2 that is changed from a state in which the engagement clutch 28b which is related to the second shift stage is engaged while the engagement clutch 28a which is related to the first shift stage is engaged, as shown in FIG. 7, and the engagement clutch 28a which is related to the first shift stage is disengaged. In the second shift stage, power is transmitted from the input clutch C2 to the differential gear mechanism 16 and further to the drive shafts 58R, 58L through the input shaft 20, the shift gear pair 26b, the engagement clutch 28b, and the output shaft 22. At this time, since all the other clutches 28a and 28c to 28f are disengaged, power transmission is not performed between the other input shaft 18 and the output shafts 22, 24. In addition, since the input clutch 20 is disengaged, the input shaft 18 becomes freely rotatable. Therefore, the input shaft 18 is relatively rotated at a portion in which rotational resistance is small among the relative rotation portions of the portions which are mechanically related to the input shaft 18, and is not relatively rotated at a portion in which rotational resistance is large. Consequently, rotational resistance is reduced in total, and power loss is reduced. More specifically, when drag resistance of the input clutch C1 is large, the input shaft 18 is rotated along with the crankshaft 12c and is rotated substantially integrally with the input shaft 20. Also, since the shift gear pairs 26a, 26c, 26e are rotationally-driven due to the rotation of the input shaft 18, gears of the shift gear pairs 26a, 26c, 26e on the side of the input shaft 22, 24 are relatively rotated with respect to the output shafts 22, 24.

As mentioned above, in the transmission 14 according to the embodiment, all the engagement clutches 28 corresponding to the shift gear pairs 26 except for the shift gear pair for the present shift stage is disengaged in step S3 until a signal which indicates the immediately before shifting state BS_{UP} or BS_{DN} is supplied from the immediately before upshifting state detection switch 78 or the immediately before downshifting state detection switch 80. Therefore, the input shaft 18 or 20 which is not related to power transmission is permitted to rotate freely during normal running, that is, at non-shifting time. The input shaft 18 or 20 is relatively rotated at a portion (for example, a portion supported by a bearing) in which rotational resistance is small among relative rotational portions of portions which are mechanically related to the input shaft 18 or 20, and is not relatively rotated at a portion (for example, the input clutch C1, and C2 ) in which rotational resistance is large. Consequently, rotational resistance is reduced in total, and power loss is reduced.

Meanwhile, when the shift lever 100 has been shifted from the position "S" to the side of the position "(+)" or the position "(-)" by the driver, and a signal which indicates the immediately before upshifting state BS_{UP} or the immediately before downshifting state BS_{DN} is supplied from the immediately before upshifting state detection switch 78 or the immediately before downshifting state detection switch 80, the engagement clutch 28 corresponding to the shift gear pair 26 for the next shift stage is engaged in step S5. Further, when the shift lever 100 reaches a portion in the vicinity of the position _{"}(+)" or the position "(-)", and a signal which indicates the upshifting request R_{UP} or the downshifting request R_{DN} is supplied from the upshifting switch 74 or the downshifting switch 76, switching (input switching in the clutch-to-clutch manner) between the input clutch C1 and C2 is performed in step S8 so as to perform shifting. Accordingly, shifting response to the shifting operation is enhanced, compared with a case in which the engagement clutch 28 for the next shift stage is engaged and switching between the input clutches C1 and C2 is performed after a signal which indicates the upshifting request R_{UP} or the downshifting request R_{DN} is supplied.

In the embodiment, the portion, which performs, steps S2, S3, S4, S5 and S6 in FIG. 5 in a series of signal processing performed by the electronic control unit 60, function as gear interruption control means. In addition, the portion, which performs steps S7, S8, and S9 in FIG. 5 in a series of signal processing performed by the electronic control unit 6, function as shift means. Next, another embodiment according to the invention will be described. Note that in the following embodiment, the same reference numeral will be assigned to a portion which is substantially the same as that in the above-mentioned embodiment, and detailed description thereof will be omitted.

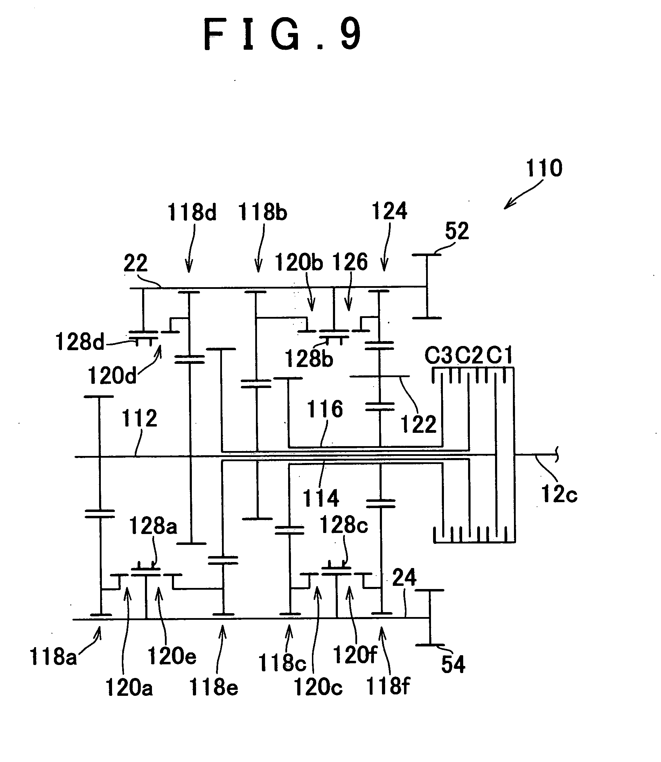

A transmission 110 in FIG. 9 is a parallel multishaft transmission which includes three input shafts 112, 114,116, and two output shafts 22, 24 that are parallel to each other. The three input shafts 112, 114, 116 are coupled with a crank shaft 12c of an engine 12 through input clutches C1, C2, C3 respectively, and the input shaft 114 passes through a shaft center of the input shaft 116 and protrudes therefrom, and the input shaft 112 passes through a shaft center of the input shaft 114 and protrudes therefrom. The input clutches C1, C2, C3 are a interruption devices for switching which permit or interrupt power transmission between the input shafts 112, 114, 116 that are the switchable shafts and a crank shaft 12c. Each of the input clutches C1, C2, C3 is independently disengaged (interrupted) by a clutch release device which is the same as that in the above-mentioned embodiment, while each of them is normally maintained to be in an engagement state by a diaphragm spring..

In the transmission 110, forward six stages and one reverse stage can be realized, and shift gear pairs, 118a, 118d which establish a first shift stage, and a fourth shift stage respectively are provided between the input shaft 112 and the output shafts 24, 22, gears of shift gear pairs 118a, 118d on the side of the output shafts 22, 24 are relatively rotatable with respect to the output shafts 22, 24, and power transmission between the gears on the side of the output shafts 22, 24, and the output shafts 22, 24 is permitted or interrupted by the engagement clutches 120a, 120d respectively. The shift gear pairs 118b, 118e which establish a second shift stage and a fifth shift stage respectively are provided between the input shaft 114 and the output shafts 22, 24, gears of the shift gear pairs 118b, 118e on the side of output shafts 22, 24 are relatively rotatable with respect to the output shafts 22, 24, and power transmission between the gears on the side of the output shafts 22, 24, and the output shafts 22, 24 is permitted or interrupted by engagement clutches 120b, 120e, respectively. Also, shift gear pairs 118c, 118f which establish a third shift stage and a sixth shift stage are provided between the input shaft 116 and the output shafts 24, gears of the shift gear pairs 118c, 118f on the side of output shafts 24 are relatively rotatable with respect to the output shafts 24, and power transmission between the gear on the side of the output shaft 24, and the output shafts 24 is permitted or interrupted by engagement clutches 120c, 120f, respectively. A reverse gear pair 124 which establishes a reverse shift stage with the counter shaft 122 for reverse is further provided in the output shaft 22, a gear of the reverse gear pair 124 on the side of the output shafts 22 is relatively rotatable with respect to the output shafts 22, and power transmission between the gear on the side of the output shaft 22, and the output shafts 22 is permitted or interrupted by an engagement clutch 126. The reverse gear pair 124 is provided at the same position as the shift gear pair 118f in an axial direction, and the gear on the side of the countershaft 122 is engaged with a gear of the shift gear pair 118f on the side of the input shaft 116 so as to be rotated. The output shafts 22, 24 and the counter shaft 122 are provided around the shaft center of the input shafts 112, 114, 116. FIG 9. is a development in which these shaft centers are shown in the common plain surface. The upper half portion with respect to the shaft center of the output shaft 22 is omitted except for an output gear 52. The lower half portion with respect of the shaft center of the output shaft 24 is omitted except for an output gear 54.

Engagement clutches 120a to 120f (hereinafter, referred to as an engagement clutch 120 unless they need to be distinguished) are gear interruption devices which permit or interrupt power transmission between the input shafts 112, 114, 116 and the output shaft 22 or between the input shafts 112, 114, 116 and the output shaft 24 through shift gear pairs 118a to 118f (hereinafter, referred to as shift gear pair 118 unless they need to be distinguished), and include a synchronous mechanism such as a synchronizer ring. An engagement clutch 126 is an interruption device which permits or interrupts power transmission between the output shaft 22 and the counter shaft 122, and further between the output shaft 22 and the input shaft 116 through a reverse gear pair 124, and includes a synchronous mechanism such as a synchronizer ring. The engagement clutches 120a, 120e are engaged or disengaged by a common clutch hub sleeve 128a, the engagement clutches 120b, 126 are engaged or disengaged by a common hub sleeve 128b, the engagement clutches 120c, 120f are engaged or disengaged by a common clutch hub sleeve 128c, and the engagement clutch 120d is engaged or disengaged by a clutch hub sleeve 128d. These four clutch hub sleeves 128a to 128d are moved in the axial direction by a sleeve moving device in the same manner as in the above-mentioned embodiment. One of forward six stages and reverse one stage is established when the given engagement clutch 120 or 126 is engaged while the input clutch C1, C2, or C3 is engaged.

In such a transmission 110, shift control can be performed according to the flowchart in FIG. 5, and the same effect as in the above-mentioned embodiment can be obtained. In addition, the transmission 110 includes the three input shafts 112, 114, 116. The shift gear pairs 118a, 118d for the first shift stage and the fourth shift stage are provided in the input shaft 112, the shift gear pairs 118b and 118e for the second shift stage and the fifth shift stage are provided in the input shaft 114, and the shift gear pairs 118c, 118f for the third shift stage and the sixth shift stage are provided in the input shaft 116. Accordingly, shift control can be performed according to the flowchart in FIG. 5, not only in shifting between the continued shift stages (upshifting and downshifting) but also in skip shifting between the first shift stage and the third shift stage, skip shifting between the second shift stage and the fourth shift stage, skip shifting between the third shift stage and the fifth shift stage, or skip shifting between the fourth shift stage and the sixth shift stage.

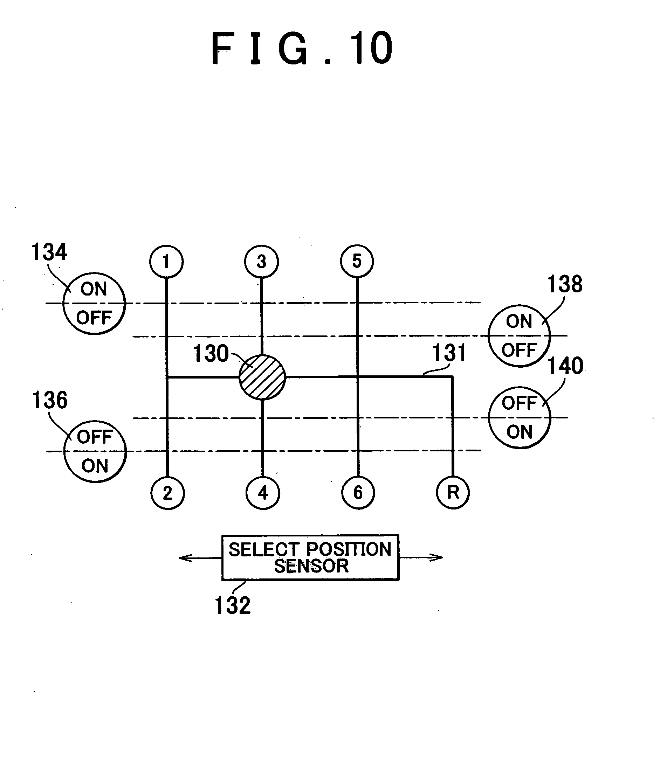

The shift stage is directly selected when the shift lever 130 in FIG. 10 is shifted to the six forward shift stage selection positions which are indicated by "1" to "6" and has been shifted to the reverse shift stages selection position which is indicated by "R", according to a shift pattern 131 shown by heavy line. The selected shift stage is detected by a select position sensor 132 which can determine four select positions, and a pair of shift detection switches 134, 136 which are provided in the vicinity of the shift stage selection position in the shift direction (longitudinal direction in FIG. 10), and shift control is performed according to the selected shift stage. A pair of immediately before shifting state detection switches 138, 140 are provided ahead of the shift detection switches 134, 136 in the shift direction. When the shift lever 130 is operated from the neutral position shown in the diagram to a given shift stage selection position, the immediately before shifting state in which there is a high possibility that shift operation will be performed is detected before the detection by the shift detection switches 134, 136. Accordingly, shift control can be performed according to the flowchart in FIG. 5 in the same manner as in the previous embodiment, and the same effects can be obtained. The shift lever 130 corresponds to the shift operation member, the select position sensor 132 and the shift detection switches 134, 136 correspond to the shift request detection devices, the immediately before shifting state detection switches 138, 140 correspond to the immediately before shifting state detection devices, and the forward shift stage selection positions "1" to "6" and the reverse shift stage selection position "R" are shift request positions. Also, the upper side of FIG. 10 is the front side of the vehicle.

Without providing the immediately before shifting state detection switches 138, 140, it can be determined that the vehicle is in the immediately before shifting state when the shift lever 130 moves out of one of the forward shift stage selection positions and the shift detection switch 134 or 136 is switched from ON to OFF. In this case, when the engagement clutch 28 or 120 for the next shift stage is engaged in step S5 in FIG. 5, the next shift stage needs to be estimated based on the operation state such as the accelerator operation amount Acc, the vehicle speed V, ON-OFF state of the foot brake and the like when the shift detection switch 134 or 136 is switched from ON to OFF. In the transmission 110 in FIG. 9, one next shift stage may be estimated for each of two input shafts among two input shafts among the input shafts 112, 114, 116, that is, two input shafts among the input shafts 112, 114, 116 other than one input shaft which is related to the power transmission for the present shift stage such that the engagement clutches 120 which are related to these shift stages are engaged. Various configurations may be made. For example, when an accelerator in operated and the vehicle speed V increases, the engagement clutches 120 for two shift stages which are continued from the present shift stage to the upshifting side may be engaged, or one engagement clutch 120 for a shift stage on the upshifting side and one engagement clutch 120 on the downshifting side, may be engaged. When the accelerator is operated and the vehicle speed V decreases, or when the accelerator is OFF and the vehicle speed V increases, the engagement clutches 120 for the two shift stages which are continued to the downshifting side may be engaged.

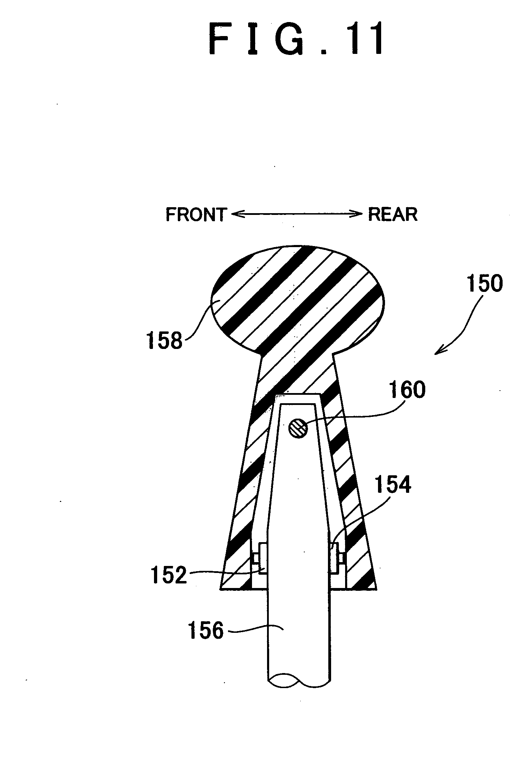

A shift lever 150 in FIG. 11 is used in place of the shift lever 100 or 130. The shift lever 150 has been shifted to the position "(+)", the position "(-)", or the shift request positions "1" to "6", and can detect the immediately before shifting state using a front side load switch 152, and a rear side load switch 154 which function as the immediately before shifting state detection devices. The shift lever 150 is rotatably provided around a pin 160 in which a knob 158 is substantially parallel to the vehicle width direction with respect to a shaft portion 156. The front side load switch 152 is provided between the lower end portion of the knob 158 and the shaft portion 156, and on the front side of the vehicle. In the case where an operating force in the forward direction which is equal to or larger than a predetermined value is applied to a head portion of the knob 158, the front side load switch 152 is turned ON when the knob 158 is rotated in the counterclockwise direction with respect to the pin 160. The rear side load switch 154 is provided between the lower end portion of the knob 158 and the shaft portion 156, and on the rear side of the vehicle. In the case where an operating force in the rearward direction which is equal to or larger than a predetermined value is applied to the head portion of the knob 158, the rear side load switch 154 is turned ON when the knob 158 is rotated in the clockwise direction with respect to the pin 160. The load switches 152, 154 are load sensors which detect that a predetermined operating force is applied to the shift operation member, and include a spring or the like so as to be switched between ON and OFF when a contact portion is pressed with a predetermined load value.

For example, in the case where the load switches 152, 154 are applied to the shift lever 100 in FIG. 3, when the shift lever 100 is shifted from the position "S" to the side of the position "(-)" or the side of the position "(+)" against the urging device, the knob 158 is rotated around the pin 160, and the front side load switch 152 or the rear side load switch 154 is turned ON. Consequently, the immediately before shifting state is detected.

In the case where the load switches 152, 154 are applied to the shift lever 130 in FIG. 10, when the shift lever 130 has been shifted out of the position "2", "4", "6" or position "R" into the neutral position (the central position in the shift direction), or when the shift lever 130 has been shifted to the position "1", "3"or "5" from the neutral position, the front side load switch 152 is turned ON. Meanwhile, when the shift lever 130 has been shifted out of the position "1", "3", or "5" into the neutral position, or when the shift lever 130 has been shifted to the position "1", "4", "6" or position "R" from the neutral position, the rear side load switch is turned ON. Consequently, the immediately before shifting state is detected. When the shift lever 130 (150) is shifted to each shift stage selection position from the neutral position, or is shifted out of the shift stage selection position into the neutral position, there exists a predetermined operation resistance (detent). The knob 158 is rotated around the shaft center of the piston 160 with respect to the shaft portion 156 based on the operation resistance.

While the embodiments according to the invention have been described in detail with reference to accompanying drawings, these are only examples of the embodiments, and the invention may be realized in various other embodiments in which various changes and modifications are made based on knowledge of those skilled in the art.

Since all engagement clutches except for an engagement clutch for a present shift stage are disengaged in step S3 until an immediately before shifting state is detected, rotational resistance is reduced, and consequently power loss is reduced. When a shift lever is operated and the immediately before shifting state is detected, an engagement clutch for a next shift stage is engaged in step S5. When the shift lever is further operated and a shifting request is detected, shifting is performed by switching switchable shafts in step S8, and an engagement clutch for a previous shift stage is disengaged.
Since all engagement clutches except for an engagement clutch for a present shift stage are disengaged in step S3 until an immediately before shifting state is detected, rotational resistance is reduced, and consequently power loss is reduced. When a shift lever is operated and the immediately before shifting state is detected, an engagement clutch for a next shift stage is engaged in step S5. When the shift lever is further operated and a shifting request is detected, shifting is performed by switching switchable shafts in step S8, and an engagement clutch for a previous shift stage is disengaged.

## Claims

1. A shift control device of a parallel multishaft transmission (14; 110) for a vehicle in which at least one of an input shaft (18, 20; 112, 114, 116) and an output shaft (22, 24) that are parallel to each other is provided in plurality so as to function as switchable shafts, and each of the plural switchable shafts is coupled with a member (12c) on an input side or on an output side through an interruption device (C1, C2, C3, 90, 92) for switching which permits or interrupts power transmission, which includes plural shift gear pairs (26a-26f; 118a-118f) that are provided between the plural switchable shafts and the other shaft and which establish plural shift stages whose shift gear ratios are different to each other, plural gear interruption devices (28a-28f; 120a-120f) each of which is provided so as to correspond to each of the plural shift gear pairs (26a-26f; 118a-118f) and which permit or interrupt power transmission, and a shift request detection device (74, 76; 134, 136) which detects that a shift operation member (100; 130) has been shifted to a given shift request position by a driver, and which performs shifting while switching the plural switchable shafts using the interruption device (C1, C2, C3, 90, 92) for switching according to operation of the shift operation member (100; 130), **characterized by** comprising:
an immediately before shifting state detection device (78, 80; 138, 140) which detects an immediately before shifting state in which there is a high possibility that the shift operation member (100; 130) will be shifted to the shift request position;
gear interruption control means for interrupting power transmission in all the gear interruption devices corresponding to the shift gear pairs except for the shift gear pair for a present shift stage until the immediately before shifting state is detected by the immediately before shifting state detection device (78, 80; 138, 140), and for permitting power transmission in the gear interruption device corresponding to the shift gear pair for a next shift stage after the immediately before shifting state is detected; and
shift means for performing shirting by switching the switchable shafts using the interruption device (C1, C2, C3, 90, 92) for switching and for interrupting power transmission in the gear interruption device corresponding to the shift gear pair for a previous shift stage after the shift request detection device (74, 76; 134, 136) detects that the shift operation member (100; 130) has been shifted to the shift request position.

2. A shift control device according to claim 1, **characterized in that**:
the plural switchable shafts are the plural input shafts (18, 20; 112, 114, 116);
the plural input shafts (18, 20; 112, 114, 116) are pararell to each other, and are rorationally driven through the interruption device (C1, C2, C3, 90, 92);
the plural shift gear pairs (26a-26f; 118a-118f) are provided between the plural input shafts and the output shaft; and
the parallel multishaft transmission is performed shifting while switching the plural input shafts (18, 20; 112, 114; 116).

3. A shift control device according to claim 1 or 2, **characterized in that** the plural switchable shafts (18, 20; 112, 114, 116) are provided on the same axis so as to pass through a shaft center of another switchable shaft.

4. A shift control device according to any one of claims 1 to 3, **characterized in that** the interruption device (C1, C2, C3, 90, 92) is a frictional engagement type clutch.

5. A shift control device according to any one of claims 1 to 4, **characterised in that** the gear interruption device (28a-28f; 120a-120f) is a synchronous engagement clutch.

6. A shift control device according to any one of claims 1 to 5, **characterized in that** the shift operation member (100) includes a shift lever which is operated between two shift request positions, that are an upshift position at which shifting is performed to a shift stage whose shift gear ratio is small and an downshift position at which shifting is performed to a shift stage whose shift gear ratio is large.

7. A shift control device according to claim 6, **characterized in that** the shift request detection device (78, 80) includes an ON-OFF switch in which ON/OFF is switched when the shift lever is shifted to the upshift position or the downshift position.

8. A shift control device according to any one of claims 1 to 7,
**characterised in that** the immediately before shifting detection device (78, 80; 138, 140) includes a position sensor which detects that the shift operation member has reached a portion in the vicinity of the shift request position.

9. A shift control device according to any one of claims 1 to 7, the immediately before shifting detection device (152, 154) includes a load sensor which detects that a predetermined operating force is applied to the shift operation member.

10. A shift control method for a parallel multishaft transmission (14; 110) for a vehicle in which at least one of an input shaft (18, 20; 112, 114, 116) and an output shaft (22, 24) that are parallel to each other is provided in plurality so as to function as switchable shafts, and each of the plural switchable shafts is coupled with a member (12c) on an input side or on an output side through an interruption device (C1, C2, C3, 90, 92) for switching which permits or interrupts power transmission, which includes plural shift gear pairs (26a-26f; 118a-118f) that are provided between the plural switchable shafts and the other shaft and which establish plural shift stages whose shift gear ratios are different to each other, plural gear interruption devices (28a-28f; 120a-120f) each of which is provided so as to correspond to each of the plural shift gear pairs (26a-26f; 118a-118f) and which permit or interrupt power transmission, and a shift request detection device (74, 76; 134, 136) which detects that a shift operation member (100; 130) has been shifted to a given shift request position by a driver, and which performs shifting while switching the plural switchable shafts using the interruption device (C1, C2, C3, 90, 92) for switching according to operation of the shift operation member (100; 130), **characterized by** comprising the steps of:
detecting an immediately before shifting state in which there is a high possibility that the shift operation member (100; 130) will be shifted to the shift request position;
interrupting power transmission in all the gear interruption devices corresponding to the shift gear pairs except for the shift gear pair for a present shift stage until the immediately before shifting state is detected, and permitting power transmission in the gear interruption device corresponding to the shift gear pair for a next shift stage after the immediately before shifting state is detected; and
performing shifting by switching the switchable shafts using the interruption device (C1, C2, C3, 90, 92) for switching and for interrupting power transmission in the gear interruption device corresponding to the shift gear pair for a previous shift stage after the shift request detection device (74, 76; 134, 136) detects that the shift operation member (100; 130) has been shifted to the shift request position.
